# EUROPÄISCHE PATENTSCHRIFT

(11) **EP 3 355 429 B1**
(45) Veröffentlichungstag und Bekanntmachung des Hinweises auf die Patenterteilung: **09.03.2022**
(21) Anmeldenummer: 17201065.4
(22) Anmeldetag: 10.11.2017
(51) Int. Cl.: H02G 11/02, B65H 75/42, B65H 75/44, H02G 1/06, G01B 7/30

(54) **ANORDNUNG ZUR ERMITTLUNG DER ORIENTIERUNG EINES VON EINER KABELTROMMEL ABGESPULTEN LEITUNGSABSCHNITTS**
ARRANGEMENT FOR DETERMINING THE ORIENTATION A LINE SECTION A CABLE REEL REELED FROM A CABLE REEL
DISPOSITIF PERMETTANT DE DÉTERMINER L'ORIENTATION D'UNE SECTION DU CÂBLE DÉVIDÉ D'UN TAMBOUR DE CÂBLE

(30) Priorität: 31.01.2017 DE 102017201544
(43) Veröffentlichungstag der Anmeldung: 01.08.2018
(73) Patentinhaber: Deere & Company, Moline, IL 61265 (US)
(72) Erfinder: Tarasinski, Nicolai, 68163 Mannheim (DE); Becker, Manfred, 68163 Mannheim (DE); Kegel, Volker, 68163 Mannheim (DE); Daubermann, Julian, 68163 Mannheim (DE)
(74) Vertreter: Dehnhardt, Florian Christopher

(56) Entgegenhaltungen:
- EP-A1- 2 053 008
- DE-A1- 1 790 108
- DE-A1- 4 429 268
- DE-A1- 19 526 185
- DE-A1-102011 051 052
- DE-U1-202006 009 750
- JP-A- H0 549 134
- KR-B1- 101 204 854
- US-A1- 2005 051 406
- US-A1- 2008 072 443
- US-A1- 2009 127 048
- US-A1- 2011 119 936

## Beschreibung

Die Erfindung betrifft eine Anordnung zur Ermittlung einer räumlichen Orientierung eines von einer Kabeltrommel abgespulten Leitungsabschnitts.

Kabeltrommeln finden im Industriebereich in unterschiedlichen Ausführungen zur Versorgung beweglicher bzw. mobiler Systeme mit elektrischer Energie Verwendung. Hierzu ist die Kabeltrommel typischerweise dem beweglichen bzw. mobilen System zugeordnet und umfasst eine auf- und abrollbare elektrische Leitung, deren freies Ende mit einer stationären Energieversorgungseinheit verbunden ist. Die Steuerung der Auf- und Abrollbewegung erfolgt beispielsweise mittels eines elektromotorischen Trommel- bzw. Wickelantriebs nach Maßgabe des jeweiligen Leitungslängenbedarfs. Im einfachsten Fall ist anstelle eines elektromotorischen Trommel- bzw. Wickelantriebs ein Federmechanismus vorgesehen, der die Kabeltrommel und damit die elektrische Leitung beim Abspulen vorspannt, sodass diese bei Nachlassen der Zugspannung selbsttätig aufgerollt wird.

Bekannt sind solche Anordnungen beispielsweise bei Schwerlastkränen zur elektrischen Versorgung eines entlang zugehöriger Schienen beweglich geführten Kranwagens. Da die Bewegung des Kranwagens fest vorgegeben ist, ist hier eine definierte Auf- und Abrollbewegung der elektrischen Leitung sichergestellt. Demgegenüber sind die Bedingungen im Falle mobiler Arbeitsmaschinen, beispielsweise eines elektrisch betriebenen landwirtschaftlichen Traktors, erheblich komplexer, da sich die mobile Arbeitsmaschine frei bewegen kann und insofern ein unerwünschtes Kreuzen des Fahrtwegs mit dem abgespulten und auf dem Boden liegenden Leitungsabschnitt nicht auszuschließen ist. Ein Überfahren der elektrischen Leitung kann hierbei zu deren Beschädigung oder sogar Zerstörung führen. Relevanter Stand der Technik wird in US 2011/119936 A1, JP H05 49134 A und US 2008/072443 A1 offenbart.

Es ist daher Aufgabe der vorliegenden Erfindung, eine Anordnung der eingangs genannten Art anzugeben, die es ermöglicht, den Verlauf und damit die Lage eines von einer Kabeltrommel abgespulten Leitungsabschnitts zu bestimmen.

Diese Aufgabe wird durch ein Strom- und Datenübertragungssystem einer mobilen Arbeitsmaschine, insbesondere eines elektrisch betriebenen landwirtschaftlichen Traktors, mit einer an einer tragenden Chassisstruktur der mobilen Arbeitsmaschine montierten Kabeltrommel mit elektromotorischem Trommel- bzw. Wickelantrieb umfassend eine Anordnung zur Ermittlung einer räumlichen Orientierung eines von der Kabeltrommel abgespulten Leitungsabschnitts mit den Merkmalen des Patentanspruchs 1 gelöst.

Die Anordnung zur Ermittlung einer räumlichen Orientierung eines von einer Kabeltrommel abgespulten Leitungsabschnitts umfasst eine Befestigungsbasis und einen gegenüber der Befestigungsbasis um eine erste und zweite Drehachse kardanisch verschwenkbaren Messfühler mit einer Kabelführung, wobei der Messfühler mit einer Sensoreinrichtung zur Erfassung von um die Drehachsen auftretenden Raumwinkeln α, β zusammenwirkt.

Mit anderen Worten wird der Messfühler von der in der Kabelführung befindlichen elektrischen Leitung stets in Richtung ihres jeweiligen Verlaufs mitgeschwenkt, was es erlaubt, eine eindeutige Aussage hinsichtlich der Orientierung des von der Kabeltrommel abgespulten Leitungsabschnitts zu treffen. Die Drehachsen können insbesondere derart ausgerichtet sein, dass die am Messfühler auftretenden Raumwinkel α, β einen horizontalen bzw. vertikalen Verlauf der an einem Kabelauslass der Kabeltrommel austretenden elektrischen Leitung wiedergeben.

Typischerweise ist die Kabeltrommel Bestandteil einer mobilen Arbeitsmaschine, vorzugsweise eines elektrisch betriebenen landwirtschaftlichen Traktors. Die mobile Arbeitsmaschine kann einen elektrischen Radantrieb sowie diverse elektrische Betriebseinrichtungen zur Durchführung landwirtschaftlicher Arbeitsfunktionen unter anderem mittels eines daran anbringbaren elektrisch betriebenen Anbau- oder Zusatzgeräts aufweisen.

Der ermittelte horizontale Leitungsverlauf erlaubt hierbei abhängig von der eingeschlagenen Bewegungsrichtung der mobilen Arbeitsmaschine eine Beurteilung, ob der abgespulte Leitungsabschnitt möglicherweise überfahren wird bzw. ob die elektrische Leitung angesichts der eingeschlagenen Bewegungsrichtung auf- oder abzurollen ist. Ähnliche Betrachtungen gelten für den ermittelten vertikalen Leitungsverlauf, der es ermöglicht, eine Aussage hinsichtlich eines übermäßigen Durchhängens des abgespulten Leitungsabschnitts zu treffen und gegebenenfalls durch gezieltes Aufrollen der elektrischen Leitung zu verringern.

Allgemein gesprochen verläuft in diesem Fall die erste Drehachse derart, dass die Sensoreinrichtung überwiegend die Richtung erfasst, die die elektrische Leitung relativ zur mobilen Arbeitsmaschine einnimmt, und die zweite Drehachse derart, dass die Sensoreinrichtung überwiegend ein Durchhängen der elektrischen Leitung erfasst.

Bei der elektrischen Leitung handelt es sich üblicherweise um ein mehradriges elektrisches Kabel, das neben Stromversorgungsadern auch solche zur Übertragung von Daten- und Steuersignalen aufweisen kann.

Vorteilhafte Weiterbildungen der erfindungsgemäßen Anordnung gehen aus den Unteransprüchen hervor.

Der Messfühler weist einen gegenüber der Befestigungsbasis kardanisch verschwenkbaren Betätigungsstab auf, an dessen freien Ende die Kabelführung angebracht ist. Der Betätigungsstab bildet somit ein Übertragungselement, das eine über die Kabelführung erfasste Lageänderung der elektrischen Leitung mechanisch an die Sensoreinrichtung übermittelt.

Des Weiteren weist die Sensoreinrichtung einen ersten Drehwinkelsensor und einen zweiten Drehwinkelsensor auf, wobei der erste Drehwinkelsensor gehäuseseitig an der Befestigungsbasis angebracht ist und geberseitig mit einer um die erste Drehachse verschwenkbaren Halterung verbunden ist, und wobei der zweite Drehwinkelsensor gehäuseseitig an der Halterung angebracht ist und geberseitig mit dem um die zweite Drehachse verschwenkbaren Messfühler verbunden ist. Bei den Drehwinkelsensoren handelt es sich entweder um (Leitplastik-) Potentiometer mit linearer Widerstandscharakteristik, die die Bereitstellung von zu den erfassten Raumwinkeln α, β proportionalen Signalspannungen ermöglichen, oder aber um digitale Inkrementalgeber. Deren Datensignale werden einer Kontrolleinheit zur Berechnung der zugehörigen Raumwinkel α, β zugeführt.

Um eine exakte Erfassung der Lage des abgespulten Leitungsabschnitts sicherzustellen, besteht die Möglichkeit, dass die Kabelführung ein Führungsstück zur formschlüssigen Aufnahme einer elektrischen Leitung aufweist, sodass ein mögliches Spiel der elektrischen Leitung innerhalb der Kabelführung minimiert wird.

Hierbei kann in dem Führungsstück eine zylindrische Durchgangsöffnung ausgebildet sein, die von mehreren Führungsrollen umgrenzt ist. Üblicherweise sind wenigstens drei Führungsrollen entlang des Innenumfangs der zylindrischen Durchgangsöffnung gleichmäßig verteilt angeordnet, sodass die durch das Führungsstück hindurchtretende elektrische Leitung radial zentriert wird.

In diesem Zusammenhang ist es denkbar, dass das Führungsstück entlang eines einlass- und/der auslassseitigen Mündungsbereichs eine Vielzahl stirnseitig ausgebildeter Schlitze aufweist, innerhalb derer die Führungsrollen drehbar aufgenommen sind. Da die Schlitze an den Stirnseiten nach außen hin offen sind, ist eine einfache Montage der Führungsrollen sichergestellt. Bei dem Führungsstück kann es sich um einen zylindrischen Körper aus Kunststoff oder Metall handeln.

Zum Schutz der durch das Führungsstück hindurchtretenden elektrischen Leitung vor möglichen Beschädigungen weisen die Führungsrollen bevorzugt jeweils eine aus Kunststoff und/oder Gummi bestehende Lauffläche auf.

Gemäß einer alternativen Ausgestaltung besteht zudem die Möglichkeit, dass das Führungsstück als Gleitbuchse ausgebildet ist, im einfachsten Fall als zylindrischer Körper mit einer dem Leitungsdurchmesser entsprechenden Durchgangsbohrung. Aufgrund des Fehlens beweglicher Teile zeichnet sich eine derartige Gleitbuchse durch besondere Robustheit und Langlebigkeit aus.

Gerade im landwirtschaftlichen Bereich ist der abgespulte Leitungsabschnitt erhöhten Verschmutzungen ausgesetzt. Um die Kabeltrommel bzw. die darauf aufgespulte elektrische Leitung sauber zu halten, kann in einem auslassseitigen Mündungsbereich des Führungsstücks ein Schmutzabstreifer angeordnet sein.

Die erfindungsgemäße Anordnung ist Bestandteil eines Strom- und Datenübertragungssystems einer mobilen Arbeitsmaschine mit einer Kabeltrommel mit elektromotorischem Trommel- bzw. Wickelantrieb sein. Das Strom- und Datenübertragungssystem bestimmt den tatsächlichen Leitungslängenbedarf der mobilen Arbeitsmaschine anhand der ermittelten räumlichen Orientierung des abgespulten Leitungsabschnitts, mithin des Leitungsverlaufs relativ zur mobilen Arbeitsmaschine, und passt diesen unter Berücksichtigung der momentanen Bewegungsrichtung und -geschwindigkeit der mobilen Arbeitsmaschine an. Zu diesem Zweck erfolgt die Ansteuerung des elektromotorischen Trommel- bzw. Wickelantriebs seitens einer von dem Strom- und Datenübertragungssystem umfassten Kontrolleinheit derart, dass (i) der abgespulte Leitungsabschnitt durch Aufrollen der elektrischen Leitung verkürzt wird, wenn sich durch Vergleich des ermittelten Leitungsverlaufs mit der momentanen Bewegungsrichtung der mobilen Arbeitsmaschine ergibt, dass sich die mobile Arbeitsmaschine und der abgespulte Leitungsabschnitt einander annähern, und dass (ii) dieser durch Abrollen der elektrischen Leitung verlängert wird, wenn sich durch Vergleich des ermittelten Leitungsverlaufs mit der momentanen Bewegungsrichtung der mobilen Arbeitsmaschine ergibt, dass sich die mobile Arbeitsmaschine und der abgespulte Leitungsabschnitt voneinander entfernen. Hierbei wird die Wickelgeschwindigkeit des elektromotorischen Trommel- bzw. Wickelantriebs jeweils entsprechend der momentanen Bewegungsgeschwindigkeit der mobilen Arbeitsmaschine angepasst. Bewegungsrichtung und -geschwindigkeit der mobilen Arbeitsmaschine werden aus den Datensignalen zugehöriger Raddrehzahlsensoren oder aber aus Positionsinformationen eines GPS-Navigationssystems abgeleitet.

Die erfindungsgemäße Anordnung zur Ermittlung einer räumlichen Orientierung eines von einer Kabeltrommel abgespulten Leitungsabschnitts wird im Folgenden anhand der beigefügten Zeichnungen näher erläutert. Es zeigen:
- Fig. 1: ein Ausführungsbeispiel der erfindungsgemäßen Anordnung zur Ermittlung einer räumlichen Orientierung eines von einer Kabeltrommel abgespulten Leitungsabschnitts,
- Fig. 2: ein Strom- und Datenübertragungssystem einer mobilen Arbeitsmaschine mit einer Kabeltrommel mit elektromotorischem Trommel- bzw. Wickelantrieb sowie einer Anordnung gemäß Fig. 1.

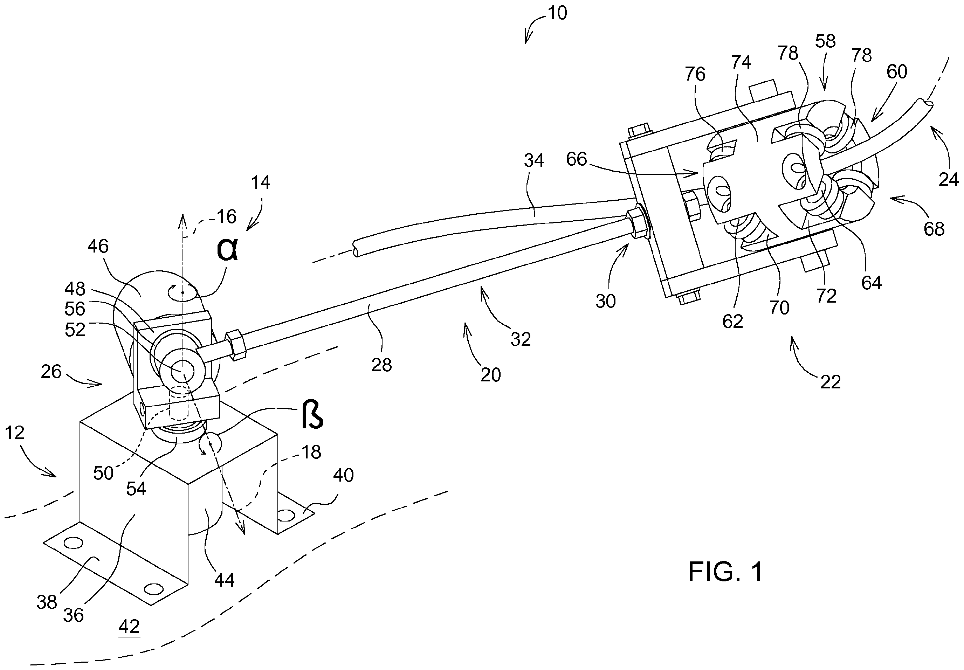

Fig. 1 zeigt ein Ausführungsbeispiel der erfindungsgemäßen Anordnung zur Ermittlung einer räumlichen Orientierung eines von einer Kabeltrommel abgespulten Leitungsabschnitts.

Die Anordnung 10 umfasst eine Befestigungsbasis 12 und einen gegenüber der Befestigungsbasis 12 mittels einer zugehörigen Gelenkanordnung 14 um eine erste und zweite Drehachse 16, 18 kardanisch verschwenkbaren Messfühler 20 mit einer Kabelführung 22, durch die eine schematisch angedeutete elektrische Leitung 24 hindurchtritt, wobei der Messfühler 20 der Bewegung der elektrischen Leitung 24 folgt.

Des Weiteren umfasst die Anordnung 10 eine Sensoreinrichtung 26, mittels derer die räumliche Orientierung bzw. Stellung des Messfühlers 20 gegenüber der Befestigungsbasis 12 um die beiden Drehachsen 16, 18 erfassbar ist. Jede der beiden Drehachsen 16, 18 repräsentiert hierbei einen bestimmten Raumwinkel α, β des Messfühlers 20 und damit letztlich der durch die Kabelführung 22 hindurchtretenden elektrischen Leitung 24.

Genauer gesagt weist der Messfühler 20 einen gegenüber der Befestigungsbasis 12 kardanisch verschwenkbaren Betätigungsstab 28 auf, an dessen freien Ende 30 die Kabelführung 22 angebracht ist. Der Betätigungsstab 28 bildet ein Übertragungselement 32, das eine über die Kabelführung 22 erfasste Lageänderung der elektrischen Leitung 24 an die Sensoreinrichtung 26 übermittelt.

Bei der elektrischen Leitung 24 handelt es sich um ein mehradriges elektrisches Kabel 34, das neben Stromversorgungsadern auch solche zur Übertragung von Daten- und Steuersignalen aufweist.

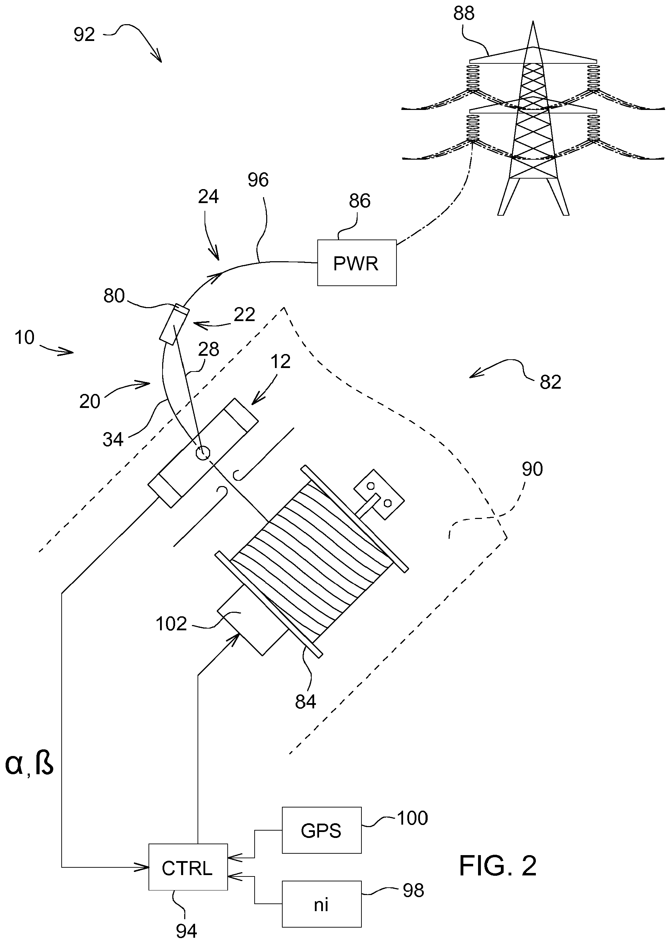

Die Befestigungsbasis 12 ist vorliegend als u-förmiges Blechbiegeteil 36 ausgebildet, das zwei nach außen gebogene Flansche 38, 40 zur Befestigung an einem tragenden Bauteil 42 aufweist. Gemäß Fig. 2 handelt es sich bei dem tragenden Bauteil 42 um eine von einer mobilen Arbeitsmaschine 82 umfasste Chassisstruktur 90.

Die Sensoreinrichtung 26 weist einen ersten Drehwinkelsensor 44 und einen zweiten Drehwinkelsensor 46 auf, wobei der erste Drehwinkelsensor 44 gehäuseseitig an der Befestigungsbasis 12 angebracht und geberseitig mit einer um die erste Drehachse 16 verschwenkbaren Halterung 48 verbunden ist, und wobei der zweite Drehwinkelsensor 46 gehäuseseitig an der Halterung 48 angebracht ist und geberseitig mit dem um die zweite Drehachse 18 verschwenkbaren Messfühler 20 verbunden ist.

Im vorliegenden Fall handelt es sich bei den beiden Drehwinkelsensoren 44, 46 um tragende Elemente der Gelenkanordnung 14 mit jeweils zueinander versetzten Drehachsen 16, 18, wobei deren (mit den Drehachsen 16, 18 zusammenfallende) mechanische Geberachsen 50, 52 mittels zugehöriger Rillenlager 54, 56 gegenüber der Befestigungsbasis 12 bzw. der Halterung 48 abgestützt sind. Abweichend davon kann die Gelenkanordnung 14 auch als Kreuzgelenk ausgebildet sein, bei dem sich die beiden Drehachsen 16, 18 in einem gemeinsamen Punkt schneiden (nicht dargestellt).

Bei den Drehwinkelsensoren 44, 46 handelt es sich um (Leitplastik-) Potentiometer mit linearer Widerstandscharakteristik, die zu den erfassten Raumwinkeln α, β proportionale Signalspannungen bereitstellen. Alternativ können diese auch als digitale Inkrementalgeber zur Erzeugung entsprechender Datensignale ausgebildet sein.

Die Kabelführung 22 weist ein Führungsstück 58 zur formschlüssigen Aufnahme der elektrischen Leitung 24 auf. In dem Führungsstück 58 ist eine zylindrische Durchgangsöffnung 60 ausgebildet, die von mehreren Führungsrollen 62, 64 umgrenzt ist. Beispielsgemäß weist das Führungsstück 58 entlang eines einlass- und/der auslassseitigen Mündungsbereichs 66, 68 eine Vielzahl stirnseitig ausgebildeter Schlitze 70, 72 auf, innerhalb derer an jeder der beiden Seiten vier der Führungsrollen 62, 64 drehbar aufgenommen sind. Die Führungsrollen 62, 64 sind jeweils entlang des Innenumfangs der zylindrischen Durchgangsöffnung 60 gleichmäßig verteilt angeordnet, sodass die durch das Führungsstück 58 hindurchtretende elektrische Leitung 24 radial zentriert wird. Bei dem Führungsstück 58 handelt es sich um einen zylindrischen Körper 74 aus Kunststoff oder Metall.

Zum Schutz der durch das Führungsstück 58 hindurchtretenden elektrischen Leitung 24 vor möglichen Beschädigungen weisen die Führungsrollen 62, 64 jeweils eine aus Kunststoff oder Gummi bestehende Lauffläche 76, 78 auf.

Des Weiteren ist im auslassseitigen Mündungsbereich 68 des Führungsstücks 58 ein in Fig. 2 schematisch gezeigter Schmutzabstreifer 80 angeordnet.

Gemäß einer nicht dargestellten alternativen Ausgestaltung der Anordnung 10 ist das Führungsstück 58 als Gleitbuchse ausgebildet, im einfachsten Fall als zylindrischer Körper mit einer dem Leitungsdurchmesser entsprechenden Durchgangsbohrung. Aufgrund des Fehlens beweglicher Teile zeichnet sich eine solche Gleitbuchse durch besondere Robustheit und Langlebigkeit aus.

Zusammenfassend wird der mit der Sensoreinrichtung 26 zusammenwirkende Messfühler 20 von der in der Kabelführung 22 befindlichen elektrischen Leitung 24 stets in Richtung ihres jeweiligen Verlaufs mitgeschwenkt, was es erlaubt, eine eindeutige Aussage hinsichtlich der Orientierung des von der Kabeltrommel 84 abgespulten Leitungsabschnitts 96 zu treffen (siehe hierzu Fig. 2).

Fig. 2 zeigt ein Strom- und Datenübertragungssystem einer mobilen Arbeitsmaschine mit einer Kabeltrommel mit elektromotorischem Trommel- bzw. Wickelantrieb sowie einer Anordnung gemäß Fig. 1.

Bei der lediglich schematisch abgebildeten mobilen Arbeitsmaschine 82 handelt es sich um einen elektrisch betriebenen landwirtschaftlichen Traktor.

Beispielsgemäß ist die Kabeltrommel 84 der mobilen Arbeitsmaschine 82 zugeordnet, wobei die von der Kabeltrommel 84 umfasste elektrische Leitung 24 mit ihrem freien Ende mit einer stationären Energieversorgungseinheit 86 verbunden ist, die ihrerseits aus einem Hochspannungsnetz 88 mit elektrischem Strom gespeist wird.

Die Kabeltrommel 84 ist hierbei gemeinsam mit der Anordnung 10 an einer tragenden Chassisstruktur 90 der mobilen Arbeitsmaschine 82 montiert.

Das Strom- und Datenübertragungssystem 92 umfasst eine mikroprozessorgesteuerte Kontrolleinheit 94, der die Signalspannungen bzw. Datensignale der beiden Drehwinkelsensoren 44, 46 zur Ermittlung der Raumwinkel α, β und damit der Orientierung des von der Kabeltrommel 84 abgespulten Leitungsabschnitts 96 zugeführt werden.

Des Weiteren sind mehrere Raddrehzahlsensoren 98 zur Erfassung von an zugehörigen Rädern der mobilen Arbeitsmaschine 82 vorliegenden Raddrehzahlen und/oder ein GPS-Navigationssystem 100 zur Bestimmung der aktuellen Position der mobilen Arbeitsmaschine 82 vorhanden. Die von den Raddrehzahlsensoren 98 bereitgestellten Datensignale bzw. die von dem GPS-Navigationssystem 100 bereitgestellten Positionsinformationen werden an die Kontrolleinheit 94 zur Ableitung der Bewegungsrichtung und -geschwindigkeit der mobilen Arbeitsmaschine 82 übermittelt.

Hierbei bestimmt die Kontrolleinheit 94 den tatsächlichen Leitungslängenbedarf der mobilen Arbeitsmaschine 82 anhand der ermittelten räumlichen Orientierung des abgespulten Leitungsabschnitts 96, mithin des Leitungsverlaufs relativ zur mobilen Arbeitsmaschine 82, und passt diesen unter Berücksichtigung der momentanen Bewegungsrichtung und -geschwindigkeit der mobilen Arbeitsmaschine 82 an. Zu diesem Zweck erfolgt die Ansteuerung des elektromotorischen Trommel- bzw. Wickelantriebs 102 seitens der Kontrolleinheit 94 derart, dass (i) der abgespulte Leitungsabschnitt 96 durch Aufrollen der elektrischen Leitung 24 verkürzt wird, wenn sich durch Vergleich des ermittelten Leitungsverlaufs mit der momentanen Bewegungsrichtung der mobilen Arbeitsmaschine 82 ergibt, dass sich die mobile Arbeitsmaschine 82 und der abgespulte Leitungsabschnitt 96 einander annähern, und dass (ii) dieser durch Abrollen der elektrischen Leitung 24 verlängert wird, wenn sich durch Vergleich des ermittelten Leitungsverlaufs mit der momentanen Bewegungsrichtung der mobilen Arbeitsmaschine 82 ergibt, dass sich die mobile Arbeitsmaschine 82 und der abgespulte Leitungsabschnitt 96 voneinander entfernen. Hierbei wird die Wickelgeschwindigkeit des elektromotorischen Trommel- bzw. Wickelantriebs 102 von der Kontrolleinheit 94 jeweils entsprechend der momentanen Bewegungsgeschwindigkeit der mobilen Arbeitsmaschine 82 angepasst.

## Patentansprüche

1. Strom- und Datenübertragungssystem einer mobilen Arbeitsmaschine, insbesondere eines elektrisch betriebenen landwirtschaftlichen Traktors, mit einer an einer tragenden Chassisstruktur (90) der mobilen Arbeitsmaschine (82) montierten Kabeltrommel (84) mit elektromotorischem Trommel- bzw. Wickelantrieb (102) umfassend eine Anordnung (10) zur Ermittlung einer räumlichen Orientierung eines von der Kabeltrommel (84) abgespulten Leitungsabschnitts, mit einer Befestigungsbasis (12) und einem gegenüber der Befestigungsbasis (12) um eine erste und zweite Drehachse (16, 18) kardanisch verschwenkbaren Messfühler (20) in Gestalt eines Betätigungsstabs (28), an dessen freien Ende (30) eine Kabelführung (22) angebracht ist, wobei der Messfühler (20) mit einer Sensoreinrichtung (26) zur Erfassung von um die Drehachsen (16, 18) auftretenden Raumwinkeln (α, β) zusammenwirkt, wobei die Sensoreinrichtung (26) einen ersten Drehwinkelsensor (44) aufweist, der gehäuseseitig an der Befestigungsbasis (12) angebracht ist und geberseitig mit einer um die erste Drehachse (16) verschwenkbaren Halterung (48) verbunden ist, und einen zweiten Drehwinkelsensor (46) aufweist, der gehäuseseitig an der Halterung (48) angebracht ist und geberseitig mit dem um die zweite Drehachse (18) verschwenkbaren Messfühler (20) verbunden ist, wobei des weiteren mehrere Raddrehzahlsensoren (98) zur Erfassung von an zugehörigen Rädern der mobilen Arbeitsmaschine (82) vorliegenden Raddrehzahlen und/oder ein GPS-Navigationssystem (100) zur Bestimmung der aktuellen Position der mobilen Arbeitsmaschine (82) vorhanden ist, und wobei eine Kontrolleinheit (94) den tatsächlichen Leitungslängenbedarf der mobilen Arbeitsmaschine (82) anhand der aus Signalspannungen bzw. Datensignalen der beiden Drehwinkelsensoren (44, 46) ermittelten räumlichen Orientierung des abgespulten Leitungsabschnitts (96) bestimmt und diesen unter Berücksichtigung einer aus Datensignalen der Raddrehzahlsensoren (98) und/oder aus Positionsinformationen des GPS-Navigationssystems (100) abgeleiteten momentanen Bewegungsrichtung und -geschwindigkeit der mobilen Arbeitsmaschine (82) anpasst.

2. Strom- und Datenübertragungssystem nach Anspruch 1, **dadurch gekennzeichnet, dass** die Kabelführung (22) ein Führungsstück (58) zur formschlüssigen Aufnahme einer elektrischen Leitung (24) aufweist.

3. Strom- und Datenübertragungssystem nach Anspruch 2, **dadurch gekennzeichnet, dass** in dem Führungsstück (58) eine zylindrische Durchgangsöffnung (60) ausgebildet ist, die von mehreren Führungsrollen (62, 64) umgrenzt ist.

4. Strom- und Datenübertragungssystem nach Anspruch 3, **dadurch gekennzeichnet, dass** das Führungsstück (58) entlang eines einlass- und/der auslassseitigen Mündungsbereichs (66, 68) eine Vielzahl stirnseitig ausgebildeter Schlitze (70, 72) aufweist, innerhalb derer die Führungsrollen (62, 64) drehbar aufgenommen sind.

5. Strom- und Datenübertragungssystem nach Anspruch 3 oder 4, **dadurch gekennzeichnet, dass** die Führungsrollen (62, 64) jeweils eine aus Kunststoff und/oder Gummi bestehende Lauffläche (76, 78) aufweisen.

6. Strom- und Datenübertragungssystem nach Anspruch 2, **dadurch gekennzeichnet, dass** das Führungsstück (58) als Gleitbuchse ausgebildet ist.

7. Strom- und Datenübertragungssystem nach wenigstens einem der Ansprüche 2 bis 6, **dadurch gekennzeichnet, dass** in einem auslassseitigen Mündungsbereich (68) des Führungsstücks (58) ein Schmutzabstreifer (80) angeordnet ist.

## Claims

1. Power-transmission and data-transmission system of a piece of mobile machinery, in particular of an electrically operated agricultural tractor, having a cable drum (84) which is installed on a supporting chassis structure (90) of the piece of mobile machinery (82) and has an electromotive drum drive or winder drive (102) comprising an arrangement (10) for determining a spatial orientation of a line portion unrolled from the cable drum (84), having a fastening base (12) and a measuring probe (20) which
can be pivoted cardanically in relation to the fastening base (12) about a first and a second axis of rotation (16, 18) and is in the form of an actuating rod (28), at the free end (30) of which a cable guide (22) is fitted, wherein the measuring probe (20) interacts with a sensor device (26) for sensing solid angles (α, β) which occur around the axes of rotation (16, 18), wherein the sensor device (26) has a first angle-of-rotation sensor (44) which has its housing side fitted on the fastening base (12) and its sensor side connected to a holder (48) which can be pivoted about the first axis of rotation (16), and a second angle-of-rotation sensor (46) which has its housing side fitted on the holder (48) and its sensor side connected to the measuring probe (20), which can be pivoted about the second axis of rotation (18), wherein also present are a plurality of wheel-speed sensors (98) for sensing wheel speeds of associated wheels of the piece of mobile machinery (82) and/or a GPS navigation system (100) for defining the current position of the piece of mobile machinery (82), and wherein a control unit (94) defines the length of line actually required by the piece of mobile machinery (82) with reference to the spatial orientation determined from signal voltages or data signals from the two angle-of-rotation sensors (44, 46) for the unwound line portion (96), and adapts said length of line required while taking account of a current movement direction and speed of the piece of mobile machinery (82), which are derived from data signals from the wheel-speed sensors (98) and/or from position-specific information from the GPS navigation system (100).

2. Power-transmission and data-transmission system according to Claim 1, **characterized in that** the cable guide (22) has a guide piece (58) for accommodating an electric line (24) in a form-fitting manner.

3. Power-transmission and data-transmission system according to Claim 2, **characterized in that** the guide piece (58) contains a cylindrical through-passage opening (60), which is surrounded by a plurality of guide rollers (62, 64).

4. Power-transmission and data-transmission system according to Claim 3, **characterized in that**, along an inlet-side and/or outlet-side mouth region (66, 68), the guide piece (58) has a multiplicity of end-side slots (70, 72), within which the guide rollers (62, 64) are accommodated in a rotatable manner.

5. Power-transmission and data-transmission system according to Claim 3 or 4, **characterized in that** the guide rollers (62, 64) each have a running surface (76, 78) consisting of plastic and/or rubber.

6. Power-transmission and data-transmission system according to Claim 2, **characterized in that** the guide piece (58) is in the form of a slide bushing.

7. Power-transmission and data-transmission system according to at least one of Claims 2 to 6, **characterized in that** a dirt scraper (80) is arranged in an outlet-side mouth region (68) of the guide piece (58).

## Revendications

1. Système de transmission de puissance et de données d'une machine de travail mobile, en particulier d'un tracteur agricole électrique, doté d'un tambour de câble (84) monté sur une structure de châssis porteuse (90) de la machine de travail mobile (82) et pourvu d'un entraînement de tambour ou d'enroulement à moteur électrique (102) comprenant un agencement (10) permettant de déterminer une orientation spatiale d'un tronçon de câble dévidé du tambour de câble (84), doté d'une base de fixation (12) et d'une sonde (20) pivotante à Cardan autour d'un premier et d'un deuxième axe de rotation (16, 18) par rapport à la base de fixation (12) sous la forme d'une tige d'actionnement (28) à l'extrémité libre (30) de laquelle est fixé un chemin de câble (22), la sonde (20) coopérant avec un dispositif capteur (26) permettant de détecter des angles solides (α, β) apparaissant autour des axes de rotation (16, 18), le dispositif capteur (26) présentant un premier capteur d'angle de rotation (44) qui est fixé côté boîtier à la base de fixation (12) et est relié côté transmetteur à une bride (48) pivotante autour du premier axe de rotation (16), et présentant un deuxième capteur d'angle de rotation (46) qui est fixé côté boîtier à la bride (48) et est relié côté transmetteur à la sonde (20) pivotante autour du deuxième axe de rotation (18), dans lequel il existe en outre plusieurs capteurs de vitesse de rotation de roue (98) permettant de détecter des vitesses de rotation de roue présentes au niveau de roues associées de la machine de travail mobile (82) et/ou un système de navigation GPS (100) permettant de déterminer la position actuelle de la machine de travail mobile (82), et dans lequel une unité de contrôle (94) détermine le besoin en longueur de câble réel de la machine de travail mobile (82) à l'aide de l'orientation spatiale du tronçon de câble dévidé (96), déterminée à partir de tensions de signal ou de signaux de données des deux capteurs d'angle de rotation (44, 46), et l'adapte en tenant compte d'une direction et vitesse de déplacement momentanée de la machine de travail mobile (82), dérivée à partir de signaux de données des capteurs de vitesse de rotation de roue (98) et/ou à partir d'informations de position du système de navigation GPS (100) .

2. Système de transmission de puissance et de données selon la revendication 1, **caractérisé en ce que** le chemin de câble (22) présente un élément de guidage (58) destiné à recevoir un câble électrique (24) par complémentarité de forme.

3. Système de transmission de puissance et de données selon la revendication 2, **caractérisé en ce que** dans l'élément de guidage (58), une ouverture de passage cylindrique (60) est réalisée qui est entourée par plusieurs galets de guidage (62, 64).

4. Système de transmission de puissance et de données selon la revendication 3, **caractérisé en ce que** l'élément de guidage (58) présente le long d'une zone d'embouchure (66, 68) côté entrée et/ou côté sortie une pluralité de fentes (70, 72) réalisée côté frontal, à l'intérieur desquelles les galets de guidage (62, 64) sont reçus en rotation.

5. Système de transmission de puissance et de données selon la revendication 3 ou 4, **caractérisé en ce que** les galets de guiage (62, 64) présentent respectivement une surface de roulement (76, 78) composée de matière plastique et/ou de caoutchouc.

6. Système de transmission de puissance et de données selon la revendication 2, **caractérisé en ce que** l'élément de guidage (58) est réalisé sous la forme d'une douille de glissement.

7. Système de transmission de puissance et de données selon au moins l'une des revendications 2 à 6, **caractérisé en ce qu'**un racleur d'impuretés (80) est disposé dans une zone d'embouchure (68) côté sortie de l'élément de guidage (58).
